# EUROPEAN PATENT APPLICATION

(11) **EP 4 205 539 A1**
(43) Date of publication of application: **05.07.2023**
(21) Application number: 22209269.4
(22) Date of filing: 24.11.2022
(51) Int. Cl.: A01K 1/01

(54) **MODULAR TYPE PET TOILET**

(30) Priority: 31.12.2021 KR 20210194187
(71) Applicant: PurrSong, Inc., Daejeon 34138 (KR)
(72) Inventor: NOH, Tae Gu, 16422 Suwon-si, Gyeonggi-do (KR); KOH, Young Kyun, 07757 Seoul (KR); BAK, Chang Hyeon, 08806 Seoul (KR)
(74) Representative: BCKIP Part mbB

(57) **Abstract**

A module type pet toilet includes a base part that has an open top and a housing space for housing a bed part, the bed part that is housed in the housing space and accommodates sand therein, and a self-assembly entrance part that is coupled on the base part and includes a space connected to the bed part. The self-assembly entrance part includes side portions constituting both side walls of the space, a back portion constituting a back wall of the space, a front entrance portion that is detachably coupled to the side portions and includes an opening portion formed by opening at least a part of the front entrance portion in order for a pet to enter and exit, and a top entrance portion that is detachably coupled on the side portions, the back portion and the front entrance portion and that is opened at least in part in order for the pet to enter and exit.

## Description

### CROSS-REFERENCE TO RELATED APPLICATION

This application claims priority on Korean Patent Applications No. 10-2021-0194187 filed on December 31, 2021 in the Korean Intellectual Property Office.

### TECHNICAL FIELD

The present disclosure relates to a module type pet toilet.

### BACKGROUND

Pets have been regarded as a part of the family and various specialized products for pets have been designed.

A pet toilet is configured to provide an excretion space to a pet and needs to be designed for easy follow-up management so that the inside can be kept clean. For example, in the case of a typical cat toilet, cat litter sand is sufficiently spread to about 5 cm or more inside and cleaning is needed whenever the cat uses the cat toilet or at least once a day in order to inhibit the spread of odor.

Also, the pet toilet needs to be easy for a pet to use. That is, the pet toilet needs to be right for each pet's personality and physique. For example, if a cat is sensitive and does not want to show excretion, a pet toilet with a roof may be useful. Further, there is a cat that has a preferred entrance (front or top) to the pet toilet.

### Prior Art Document

### [Patent Document]

(Patent Document 1) Korean Patent No. 10-1959717 (registered on March 13, 2019)
(Patent Document 2) Korean Patent Publication No. 10-1968478 (registered on April 8, 2019)

### SUMMARY

The present disclosure provides a module type pet toilet that provides a structure easy for a pet to use.

Further, the present disclosure provides a module type pet toilet that is designed for easy follow-up management so that the inside can be kept clean.

However, the problems to be solved by the present disclosure are not limited to the above-described problems. There may be other problems to be solved by the present disclosure.

As a means for solving the problems, according to an aspect of the present disclosure, a module type pet toilet comprises a base part that has an open top and a housing space for housing a bed part, the bed part that is housed in the housing space and accommodates sand therein, and a self-assembly entrance part that is coupled on the base part and includes a space connected to the bed part, wherein the self-assembly entrance part includes side portions constituting both side walls of the space, a back portion constituting a back wall of the space, a front entrance portion that is detachably coupled to the side portions and includes an opening portion formed by opening at least a part of the front entrance portion in order for a pet to enter and exit, and a top entrance portion that is detachably coupled on the side portions, the back portion and the front entrance portion and that is opened at least in part in order for the pet to enter and exit.

The above-described aspects are provided by way of illustration only and should not be construed as liming the present disclosure. Besides the above-described embodiments, there may be additional embodiments described in the accompanying drawings and the detailed description.

According to the present disclosure, the position, shape or number of entrance can be adjusted depending on characteristics or habits of a pet. Also, it is possible to provide a module type pet toilet that is easy for a user to assemble into a structure, which is convenient for a pet to use, by opening or closing the top side.

Further, according to the present disclosure, the top side of the pet toilet is detachably coupled, and, thus, the top side of the pet toilet can be opened or closed depending on circumstances. Therefore, it is possible to provide a module type pet toilet that is designed for easy follow-up management so that the inside can be kept clean.

### BRIEF DESCRIPTION OF THE DRAWINGS

In the detailed description that follows, embodiments are described as illustrations only since various changes and modifications will become apparent to a person with ordinary skill in the art from the following detailed description. The use of the same reference numbers in different figures indicates similar or identical items.
**FIG. 1** is a configuration view of a module type pet toilet according to an embodiment of the present disclosure.
**FIG. 2** is an exploded view of the module type pet toilet according to an embodiment of the present disclosure.
**FIG. 3A** is a diagram provided for explaining a front entrance portion that can be assembled according to an embodiment of the present disclosure.
**FIG. 3B** is a diagram provided for explaining a front entrance portion that can be assembled according to an embodiment of the present disclosure.
**FIG. 3C** is a diagram provided for explaining a front entrance portion that can be assembled according to an embodiment of the present disclosure.
**FIG. 4A** is a diagram provided for explaining a coupling part according to an embodiment of the present disclosure.
**FIG. 4B** is a diagram provided for explaining a coupling part according to an embodiment of the present disclosure.
**FIG. 5A** is a diagram provided for explaining an air purifying unit according to an embodiment of the present disclosure.
**FIG. 5B** is a diagram provided for explaining an air purifying unit according to an embodiment of the present disclosure.
**FIG. 5C** is a diagram provided for explaining an air purifying unit according to an embodiment of the present disclosure.
**FIG. 6A** is a diagram provided for explaining a shielding space according to an embodiment of the present disclosure.
**FIG. 6B** is a diagram provided for explaining a shielding space according to an embodiment of the present disclosure.
**FIG. 6C** is a diagram provided for explaining a shielding space according to an embodiment of the present disclosure.

### DETAILED DESCRIPTION

Hereafter, embodiments of the present disclosure will be described in detail with reference to the accompanying drawings so that the present disclosure may be readily implemented by a person with ordinary skill in the art. However, it is to be noted that the present disclosure is not limited to the embodiments but may be embodied in various other ways. In drawings, parts irrelevant to the description are omitted for the simplicity of explanation, and like reference numerals denote like parts through the whole document.

Through the whole document, the term "comprises or includes" and/or "comprising or including" used in the document means that one or more other components, steps, operation and/or existence or addition of elements are not excluded in addition to the described components, steps, operation and/or elements unless context dictates otherwise. Further, through the whole document, the term "connected to" or "coupled to" that is used to designate a connection or coupling of one element to another element includes both a case that an element is "directly connected or coupled to" another element and a case that an element is "electronically connected or coupled to" another element via still another element. Furthermore, through the whole document, the term "on" that is used to designate a position of one element with respect to another element includes both a case that the one element is adjacent to the other element and a case that any other element exists between these two elements.

Throughout this document, a part of an operation or function described as being carried out by a terminal or device may be implemented or executed by a server connected to the terminal or device. Likewise, a part of an operation or function described as being implemented or executed by a server may be so implemented or executed by a terminal or device connected to the server.

Hereinafter, embodiments of the present disclosure will be explained in detail with reference to the accompanying drawings.

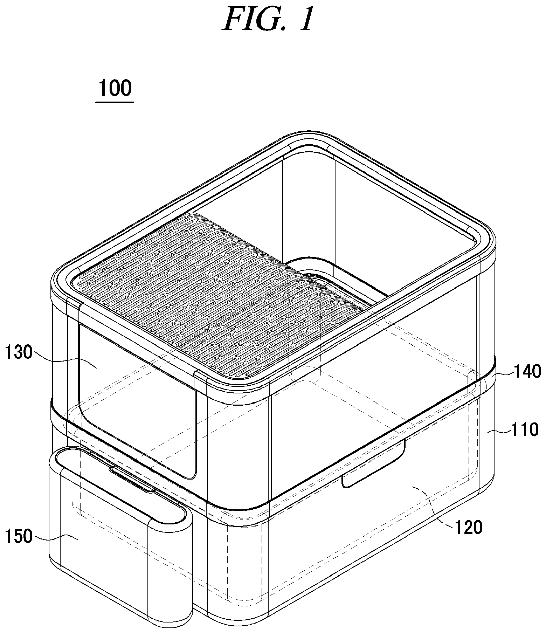

**FIG. 1** is a configuration view of a module type pet toilet according to an embodiment of the present disclosure. Referring to **FIG. 1****,** a module type pet toilet 100 may be composed of a base part 110, a bed part 120 and a self-assembly entrance part 130. The module type pet toilet 100 may include a coupling part 140 that couples the base part 110 to the self-assembly entrance part 130, and may further include a foot support part 150 coupled to an external front surface of the base part 110.

However, the module type pet toilet 100 illustrated in **FIG. 1** is merely an embodiment of the present disclosure, and various modifications based on the components illustrated in **FIG. 1** are possible.

The module type pet toilet 100 may be configured to have an excretion space where a pet such as a cat can excrete, but is not limited to the shape illustrated in **FIG. 1****.**

The module type pet toilet 100 is configured such that the position, shape or number of entrance can be adjusted depending on characteristics or habits of a pet. For example, the module type pet toilet 100 may be a module type product that can be modified in shape or configuration by a user through a simple assembly. For example, the user of the module type pet toilet 100 may modify the self-assembly entrance part 130 in various ways to modify the position, shape or number of entrance to the bed part 120.

As illustrated in **FIG. 1****,** the module type pet toilet 100 is composed of the base part 110 that houses the bed part 120 therein and the self-assembly entrance part 130. The bed part 120 housed in the base part 110 may provide an excretion space where a pet can excrete. For example, the bed part 120 may accommodate pet litter sand.

The self-assembly entrance part 130 coupled on the base part 110 may serve as a roof, entrance or foot support of the module type pet toilet 100. The base part 110 and the self-assembly entrance part 130 may be coupled to each other through the coupling part 140.

The self-assembly entrance part 130 may be modify in shape by the user through a simple assembly. For example, in the module type pet toilet 100, a part of a front surface of the self-assembly entrance part 130 may be opened, a door may be coupled to a part of the front surface of the assembly entrance part 130, or all of the front surface, side surfaces and a back surface of the assembly entrance part 130 may be closed. Accordingly, the pet may use the module type pet toilet 100 through the front surface of the self-assembly entrance part 130 or the top of the self-assembly entrance part 130.

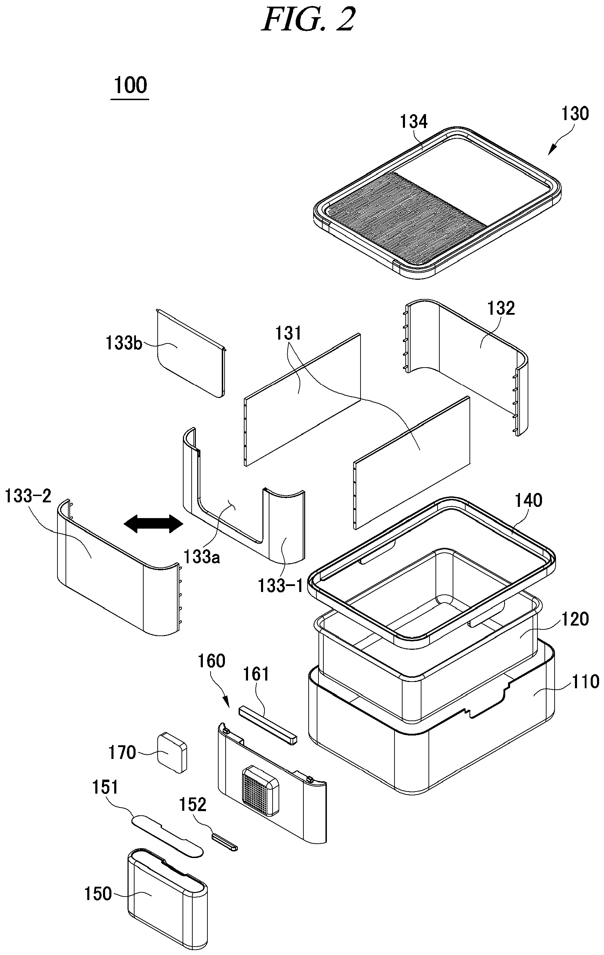

Hereinafter, the configuration of the module type pet toilet 100 will be described in detail with reference to **FIG. 2** to **FIG. 6****.**

**FIG. 2** is an exploded view of the module type pet toilet according to an embodiment of the present disclosure. Referring to **FIG. 2****,** the base part 110 has an open top and a housing space for housing the bed part 120.

The bed part 120 may be housed in the housing space and may accommodate solids therein. For example, the bed part 120 may be the excretion space where the pet can excrete. The bed part 120 may accommodate a certain amount of solids, and the solids may be, for example, sand. The pet (for example, cat) may excrete on the solids. For example, the solids may include one or more of bentonite, tofu sand, pellets and silica gel. The solids are what is commonly referred to herein as sand for convenience.

As illustrated in **FIG. 2****,** the self-assembly entrance part 130 may serve as a roof, entrance or foot support of the module type pet toilet 100. The self-assembly entrance part 130 may be coupled on the base part 110 and may include a space connected to the bed part 120. The base part 110 and the self-assembly entrance part 130 may be coupled to each other through the coupling part 140.

Specifically, the self-assembly entrance part 130 may include side portions 131 constituting both side walls of the space, a back portion 142 constituting a back wall of the space and a front entrance portion 133-1 constituting a front surface of the space.

The front entrance portion 133-1 is detachably coupled to the side portions 131, and may include an opening portion 133a formed by opening at least a part of the front entrance portion 133-1 in order for the pet to enter and exit. The front entrance portion 133-1 may include a door portion 133b that is detachably coupled to the opening portion 133a. The door portion 133b may open the opening portion 133a in one direction or both directions.

For example, the user may couple the door portion 133b to the opening portion 133a of the front entrance portion 133-1. In this case, the door portion 133b may serve as a door of the module type pet toilet 100. For another example, the user may remove the door portion 133b from the opening portion 133a. In this case, the opening portion 133a that is opened may serve as a door of the module type pet toilet 100.

Meanwhile, the self-assembly entrance part 130 may further include a front portion 133-2 that can be replaced with the front entrance portion 133-1. That is, the user may replace the front entrance portion 133-1 with the front portion 133-2. For example, the user may decouple the front entrance portion 133-1 from the side portions 131 and may couple the front portion 133-2 to the side portions 131. As illustrated in **FIG. 2****,** the front portion 133-2 is different from the front entrance portion 133-1 in that it does not include the opening portion 133a.

For example, when the front portion 133-2 is coupled to the side portions 131, the pet may use the module type pet toilet 100 through a top entrance portion 134 that is opened at least in part.

The top entrance portion 134 may be detachably coupled on the side portions 131, the back portion 142 and the front entrance portion 133-1 or the front portion 133-2. That is, the top entrance portion 134 can be coupled to and decoupled from the self-assembly entrance part 130. For example, the user may remove the top entrance portion 134 from the self-assembly entrance part 130 to dispose of excreta of the pet accumulated in the bed part 120 and thus can easily dispose of the excreta of the pet. The user may decouple or couple the top entrance portion 134 from or to the self-assembly entrance part 130 depending on circumstances and thus can easily manage the module type pet toilet 100.

At least a part of the top entrance portion 134 may be opened in order for the pet to enter and exit. For example, the pet may enter and exit from the bed part 120 through the top entrance portion 134 that is opened in part.

Referring to **FIG. 2****,** the foot support part 150 may be coupled to an external front surface of the base part 110. For example, the foot support part 150 may include a mat 151 and an LED unit 152 thereon. The LED unit 152 may operate a light so that the pet can easily use the module type pet toilet 100 in the middle of dark night or in a dark space.

For example, the pet may use the foot support part 150 to enter and exit from the module type pet toilet 100. For example, the pet may enter the bed part 120 by taking a step on the mat 151 of the foot support part 150 to pass through the opening portion 133a, to push the door portion 133b or to pass through the top entrance portion 134.

Meanwhile, an air purifying unit 160 may be coupled to an internal front surface of the base part 110, and a fan unit 170 may be coupled to the internal front surface. The fan unit 170 may communicate with the air purifying unit 160 to discharge air to the outside of the module type pet toilet 100. In this case, the foot support part 150 may be formed to cover the fan unit 170, and, thus, the fan unit 170 may be located inside the foot support part 150. Since the fan unit 170 is located inside the foot support part 150, the space can be used efficiently and the product can be manufactured small in size.

For example, the air purifying unit 160 may suck in the polluted air inside the bed part 120 through an air inlet 161. The air purifying unit 160 may deodorize the polluted air sucked therein. The fan unit 170 may discharge the deodorized air to the outside. To this end, the foot support part 150 may have an open bottom or may include a plurality of holes on the bottom through which the deodorized air may be discharged to the outside.

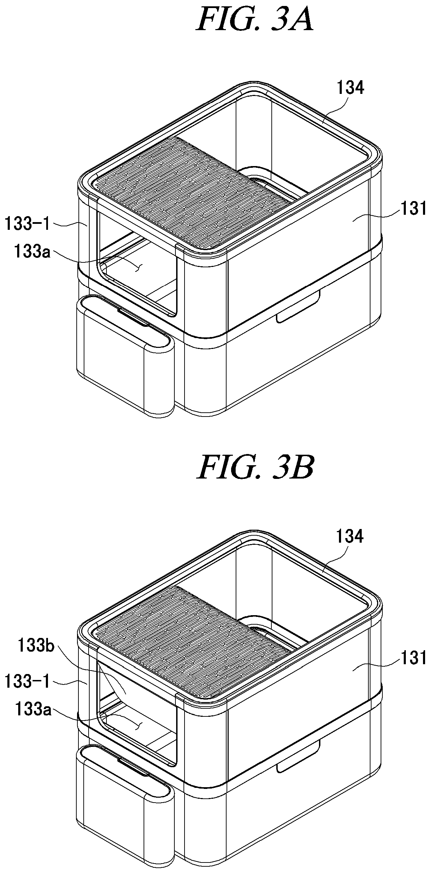

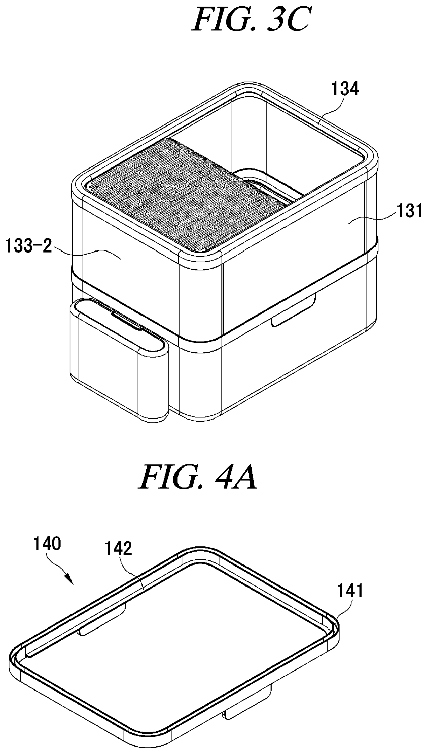

**FIG. 3** is a diagram provided for explaining a front entrance portion that can be assembled according to an embodiment of the present disclosure. **FIG. 3A** shows an example of the module type pet toilet 100 in which a part of the front entrance portion 133-1 is opened, **FIG. 3B** shows an example of the module type pet toilet 100 in which the door portion 133b of the front entrance portion 133-1 is coupled, and **FIG. 3C** shows an example of the module type pet toilet 100 in which the front entrance portion 133-1 is replaced with the front portion 133-2.

First, referring to **FIG. 3A****,** the side portions 131 may be coupled to the front entrance portion 133-1 including the opening portion 133a in the module type pet toilet 100. In this case, the pet may enter and exit from the excretion space in the module type pet toilet 100 through the opening portion 133a, or may enter and exit from the excretion space through the top entrance portion 134.

Referring to **FIG. 3B****,** the door portion 133b may be coupled to the opening portion 133a in the module type pet toilet 100. In this case, the pet may push the door portion 133b to enter and exit from the excretion space in the module type pet toilet 100, or may enter and exit from the excretion space through the top entrance portion 134.

If the door portion 133b is coupled to the opening portion 133a that is an open part of the front entrance portion 133-1, the opening portion 133a of the front entrance portion 133-1 may be closed by the door portion 133b except when the pet enters and exits to use the excretion space. Therefore, it is possible to suppress the discharge of odor form the inside to the outside and also possible to suppress splatters of pet litter sand to the outside.

Referring to **FIG. 3C****,** the front portion 133-2 instead of the front entrance portion 133-1 may be coupled to the side portions 131 in the module type pet toilet 100. In this case, the pet may enter and exit from the excretion space only through the top entrance portion 134.

If the front portion 133-2 is coupled to the side portions 131, the self-assembly entrance part 130 may be fully closed except a part of the top side. Therefore, it is possible to suppress the discharge of odor form the inside to the outside and also possible to suppress splatters of pet litter sand to the outside.

As described above, the position, shape or number of entrance of the module type pet toilet 100 may be adjusted depending on characteristics or habits of a pet by the user through a simple assembly. For example, in the module type pet toilet 100, the door portion 133b may be coupled to or decoupled from the opening portion 133a of the front entrance portion 133-1 by the user through a simple assembly, and the front entrance portion 133-1 coupled to the side portions 131 may be replaced with the front portion 133-2.

For example, a pet which cannot pass through the top entrance portion 134 may use the front entrance portion 133-1 including the opening portion 133a as shown in **FIG. 3A****,** and the user may couple the door portion 133b to the opening portion 133a to suppress the discharge of odor and splatters of pet litter sand to the outside, or may replace the front entrance portion 133-1 with the front portion 133-2.

For another example, the user may replace the front entrance portion 133-1 with the front portion 133-2 having a blocked surface for a pet which never uses the opening portion 133a that is an open part of the front entrance portion 133-1.

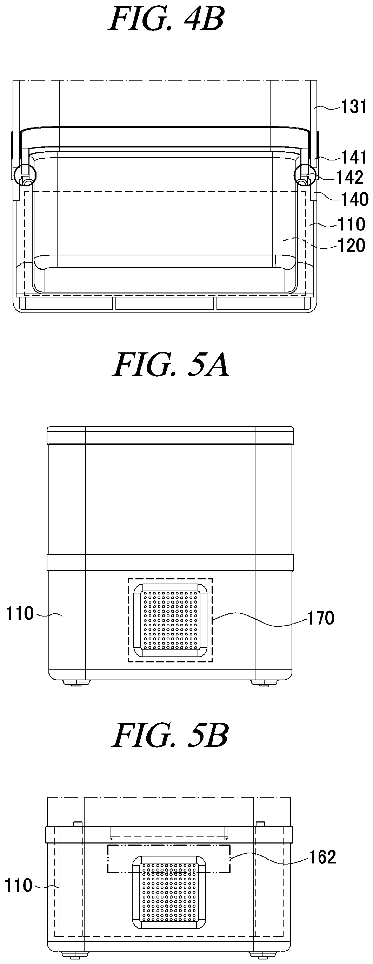

**FIG. 4** is a diagram provided for explaining a coupling part according to an embodiment of the present disclosure. Referring to **FIG. 4A****,** the coupling part 140 may include fixing grooves 141 and protrusions 142.

Referring to **FIG. 4A** and **FIG. 4B****,** the fixing grooves 141 are formed to a predetermined length on the top side of the coupling part 140 and configured to fix the side portions 131, the back portion 142 and the front entrance portion or the front portion. For example, bottom ends of the side portions 131 may be inserted into the fixing grooves 141 and fixed to the coupling part 140.

The protrusions 142 may be formed to protrude in a direction orthogonal to a direction in which the base part 110 is coupled to the self-assembly entrance part 130. For example, the protrusions 142 may have a predetermined width and may be formed to protrude inward along an inner circumferential direction of the coupling part 140.

Referring to **FIG. 4B****,** the protrusions 142 of the coupling part 140 may partly cover over a space between the base part 110 and the bed part 120. That is, the protrusions 142 may block the inflow of sand into the space between the base part 110 and the bed part 120.

For example, if the pet is a cat, the cat usually digs cat litter sand during excretion, and, thus, the sand loaded on the bed part 120 may splatter to the space between the base part 110 and the bed part 120. In this case, the protrusions 142 of the coupling part 140 may block splatters of the sand to the space between the base part 110 and the bed part 120. Accordingly, the inside of the module type pet toilet 100 can be kept and managed clean.

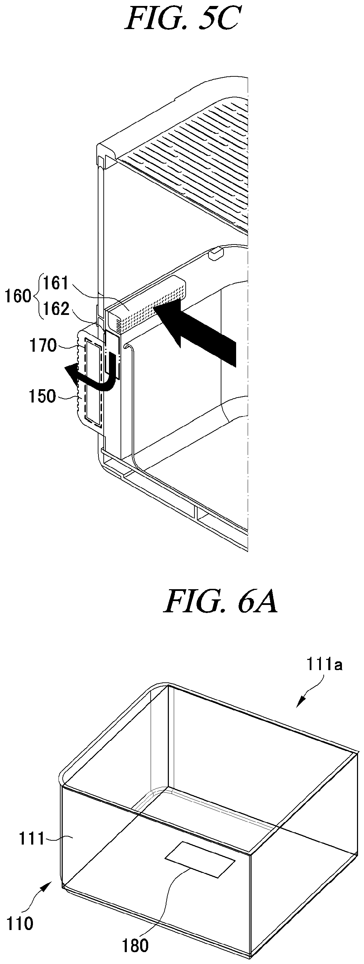

**FIG. 5** is a diagram provided for explaining an air purifying unit according to an embodiment of the present disclosure. Referring to **FIG. 5A** to **FIG. 5C****,** the air purifying unit 160 may be provided on the internal front surface of the base part 110 and the fan unit 170 may be provided inside the foot support part 150. For example, the air purifying unit 160 may purify the polluted air inside the module type pet toilet 100 and the fan unit 170 may discharge the purified air to the outside.

Specifically, referring to **FIG. 5C****,** the air purifying unit 160 may include the air inlet 161 and a deodorizing filter 162. The air inside the bed part 120 may be introduced into the air purifying unit 160 through the air inlet 161. For example, the air inlet 161 may be located at the top side of the front surface of the base part 110 and may introduce the polluted air inside the bed part 120 into the air purifying unit 160 and further toward the deodorizing filter 162.

The polluted air introduced through the air inlet 161 may be deodorized by the deodorizing filter 162. The deodorized air may be discharged to the outside through the fan unit 170. As described above, the module type pet toilet 100 can deodorize odor and polluted air generated inside during excretion of the pet and discharge them to the outside. Therefore, it is possible to suppress the discharge of odor around the module type pet toilet 100.

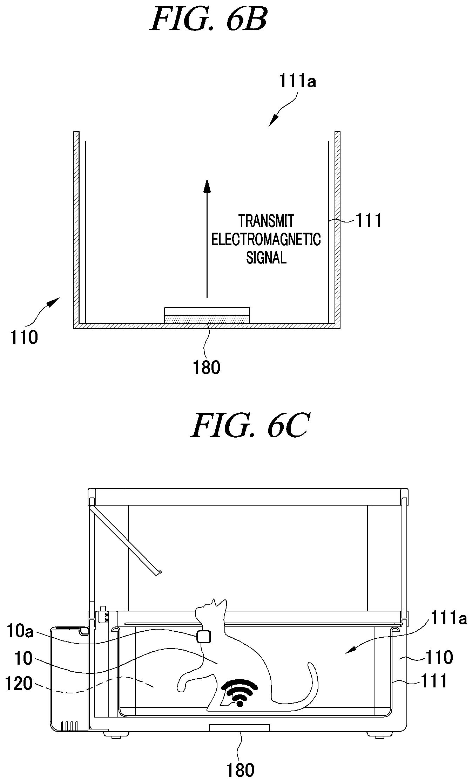

**FIG. 6** is a diagram provided for explaining a shielding space according to an embodiment of the present disclosure. Referring to **FIG. 6A****,** a shielding space 111a where electromagnetic signals are shielded may be formed inside the base part 110.

Specifically, the base part 110 may include a plurality of shielding surfaces 111. For example, internal side surfaces of the base part 110 may be shielding surfaces 111 that shield electromagnetic signals.

Also, an electromagnetic signal transmitter 180 may be provide inside the base part 110. For example, the electromagnetic signal transmitter 180 may be located on a bottom surface of the shielding space 111a.

Referring to **FIG. 6B****,** the electromagnetic signal transmitter 180 located on a bottom surface of the base part 110 may transmit an electromagnetic signal toward the shielding space 111a. For example, the electromagnetic signal transmitter 180 may transmit an electromagnetic signal upwards from the bottom surface of the shielding space 111a as illustrated in **FIG. 6B****.**

Referring to **FIG. 6C****,** the electromagnetic signal transmitter 180 may transmit an electromagnetic signal to at least one pet device 10a connected thereto. In this case, the electromagnetic signal transmitter 180 may be configured as an antenna, and may transmit an electromagnetic signal to the pet device 10a regularly or when it is connected to the pet device 10a.

For example, the module type pet toilet 100 may identify the pet device 10a by using the pet device 10a worn by a pet 10.

Specifically, when the module type pet toilet 100 determines that the strength of an electromagnetic signal received from the pet device 10a is within a predetermined range, the module type pet toilet 100 may identify the specific pet device 10a worn by the specific pet 10 that enters the module type pet toilet 100.

For example, when a plurality of pets 10 each wearing a pet device 10a is within a predetermined radius from the module type pet toilet 100, the module type pet toilet 100 may receive electromagnetic signals including information about the pet devices 10a from the plurality of pet devices 10a and identify any one of the plurality of pet devices 10 based on the strengths of the received electromagnetic signals. The module type pet toilet 100 may identify the pet 10 using the module type pet toilet 100 based on information about the pet device 10a.

As described above, it is possible to identify the pet 10 using the module type pet toilet 100, and, thus, the module type pet toilet 100 can be easily managed through assembly or modification to suit the circumstances with reference to the result of identification.

The above description of the present disclosure is provided for the purpose of illustration, and it would be understood by those skilled in the art that various changes and modifications may be made without changing technical conception and essential features of the present disclosure. Thus, it is clear that the above-described embodiments are illustrative in all aspects and do not limit the present disclosure. For example, each component described to be of a single type can be implemented in a distributed manner. Likewise, components described to be distributed can be implemented in a combined manner.

The scope of the present disclosure is defined by the following claims rather than by the detailed description of the embodiment. It shall be understood that all modifications and embodiments conceived from the meaning and scope of the claims and their equivalents are included in the scope of the present disclosure.

### Explanation of Reference Numerals

100: Module type pet toilet
110: Base part
120: Bed part
130: Self-assembly entrance part
140: Coupling part
150: Foot support part

## Claims

1. A module type pet toilet, comprising:
a base part that has an open top and a housing space for housing a bed part;
the bed part that is housed in the housing space and accommodates sand therein; and
a self-assembly entrance part that is coupled on the base part and includes a space connected to the bed part,
wherein the self-assembly entrance part includes:
side portions constituting both side walls of the space;
a back portion constituting a back wall of the space;
a front entrance portion that is detachably coupled to the side portions and includes an opening portion formed by opening at least a part of the front entrance portion in order for a pet to enter and exit; and
a top entrance portion that is detachably coupled on the side portions, the back portion and the front entrance portion and that is opened at least in part in order for the pet to enter and exit.

2. The module type pet toilet of Claim 1,
wherein the front entrance portion includes a door portion that is detachably coupled to the opening portion and opens the opening portion.

3. The module type pet toilet of Claim 1 or 2, further comprising:
a front portion that is replaced with the front entrance portion and coupled to the side portions and blocks the front of the space.

4. The module type pet toilet of any one of Claims 1 to 3, further comprising:
a coupling part that couples the base part to the self-assembly entrance part,
wherein the coupling part includes fixing grooves that fix the side portions, the back portion and the front entrance portion.

5. The module type pet toilet of Claim 4,
wherein the coupling part includes protrusions that protrude in a direction orthogonal to a direction in which the base part is coupled to the self-assembly entrance part and block the inflow of the sand into a space between the base part and the bed part.

6. The module type pet toilet of any one of Claims 1 to 5, further comprising:
a foot support part that is coupled to an external front surface of the base part.

7. The module type pet toilet of Claim 6, further comprising:
an air purifying unit that is coupled to an internal front surface of the base part,
wherein the purifying unit includes:
an air inlet through which air inside the bed part is introduced; and
a deodorizing filter that deodorizes the air.

8. The module type pet toilet of Claim 7, further comprising:
a fan unit that is located inside the foot support part and communicates with the air purifying unit to discharge the air to an outside of the module type pet toilet.

9. The module type pet toilet of Claim 8,
wherein the base part includes a plurality of shielding surfaces that shields electromagnetic signals.

10. The module type pet toilet of Claim 9, further comprising:
an electromagnetic signal transmitter that is located on a bottom surface of the base part and transmits an electromagnetic signal toward a shielding space formed by the shielding surfaces.
